# EUROPEAN PATENT APPLICATION

(11) **EP 1 276 054 A1**
(43) Date of publication of application: **15.01.2003**
(21) Application number: 01902824.0
(22) Date of filing: 09.02.2001
(51) Int. Cl.: G06F 15/00, A61B 5/117

(54) **PERSONAL AUTHENTICATION SYSTEM**

(30) Priority: 09.02.2000 JP 2000032134
(71) Applicant: Ochiai, Nobuyoshi, Saitama-city, Saitama 336-0003 (JP)
(72) Inventor: Ochiai, Nobuyoshi, Saitama-city, Saitama 336-0003 (JP)
(74) Representative: Power, Philippa Louise
(86) International application number: JP0100931
(87) International publication number: WO01059580

(57) **Abstract**

A personal identification system (1) comprises an identification information memory (18) for recording identification data which identifies an individual; an application-specific code memory (16) for recording application-specific codes each being a combination of the identification data corresponding to each of applications of the personal identification system (1); a scanner (28) and a keyboard (23) for accepting input of certification data corresponding to the identification data from a user of the personal identification system (1); a first comparing section (24) for judging whether the certification data matches the application-specific code recorded in the application-specific code memory (16); and a second comparing section (26) for judging whether the certification data matches the identification data recorded in the identification information memory (18). With the use of the application-specific codes, the personal identification system (1) can handle a plurality of personal identification numbers, etc.

## Description

### TECHNICAL FIELD

The present invention relates to a verification apparatus for identifying a living thing by using, for example, an IC card. In particular, the present invention relates to a personal identification apparatus used in a plurality of applications and adapted for a plurality of types of machines. More specifically, the present invention relates to an apparatus for identifying an individual by using an iris pattern. The present invention also relates to a scanner for recording a pattern such as a fingerprint on a surface of a human body. The present invention also relates to a code for recording a pattern such as a fingerprint on a surface of a human body.

### BACKGROUND ART

(1) Personal identification has been hitherto performed by automated-teller machines in banks. In the automated-teller machine, a person is identified (verified) by using a cash card. The procedure of identification will be explained below.
   A person, who can use the cash card, has a code number (personal identification number) recorded in the cash card. A person, who uses the card, inserts the cash card into the automated-teller machine, and the card user inputs the code number into the automated-teller machine. The automated-teller machine compares the code number recorded in the cash card with the code number inputted by the card user. If the former code number matches the latter code number, it is judged that the card user is the authorized person who can use the card. If the former code number does not match the latter code number, it is judged that the card user is not the authorized person who can use the card.
   When verification is required in a plurality of applications such as immigration verification, and medical verification, different code numbers should be used depending on the applications. When only one code number is used, if the code number is stolen by another person, then the person can pretend the genuine card user (person who can use the card), and use the card in all of the applications. Therefore, when verification is required for a plurality of applications, verification is performed by using a plurality of cards corresponding to the respective applications.
   Further, even in one application, if there are different systems for performing verification, the verification is performed by using a plurality of cards required for the respective systems. For example, if a person having accounts at different banks intends to withdraw money, verification is performed by using a plurality of cards for the respective accounts.
(2) The fingerprint is unique to every individual, and often used to verify or identify the individual. In order to identify an individual by using a fingerprint, the fingerprint is picked up by using a scanner in some cases. Such a scanner has a glass flat plate in the same manner as in scanners used for copying machines or the like. A human finger is placed on the glass, and irradiated with a light source from the back of the glass. Reflected light is captured by a CCD element to capture the fingerprint as a graphic image.
(3) The fingerprint is unique to every individual. Therefore, the fingerprint is often used to verify and identify the individual. For example, the following method is used to identify an individual by using the fingerprint. At first, an image of a fingerprint of an individual A is recorded beforehand as image data in an identification system. Subsequently, in order to judge, i.e., verify whether or not an individual B is the individual A, a fingerprint of the individual B is picked up as image data, for example, by using a scanner. It is judged whether or not the image of the fingerprint of the individual A matches the image of the fingerprint of the individual B, by using a technique of pattern matching. If the former image matches the latter image, the individual A is identical with the individual B.
(4) The iris pattern is also unique to every individual. A known apparatus identifies an individual by photographing the iris pattern. The iris pattern delicately changes depending on the intensity of light with which the eye is irradiated, for example, in accordance with the opening and the closing of the pupil. Therefore, identification with the iris pattern is generally performed by irradiating the eye with light having a constant intensity.

However, in the item (1). it is troublesome for the card user to perform verification by using the plurality of cards for the different applications and systems as described above. Therefore, it is desirable that a plurality of code numbers or data (for example, the fingerprint and/or the iris pattern of the genuine person) can be treated with a single card. Accordingly, an object of the present invention is to provide a personal identification system capable of handling a plurality of code numbers or data (for example, a fingerprint and/or a iris pattern of a genuine person) with a single card, and a personal identification record used for such a personal identification system.

In the item (2), the scanner as described above is not suitable for the finger, because the finger is placed on the flat glass plate. The flat glass plate does not fit the finger. Therefore, the image of the fingerprint delicately changes depending on the pressure applied to the finger by the glass plate. As a result, identification of a person is not performed correctly in some cases. Accordingly, an object of the present invention is to provide a fingerprint-reading scanner in which an image of a fingerprint is scarcely changed.

In the item (3), it takes a long period of time to perform the pattern matching. For example, the pattern matching is performed by successively comparing binary images. Therefore, the comparison is consequently repeated by a number of times corresponding to the number of image pixels of the binary images, and hence it takes a long period of time. The same problem occurs not only in the fingerprint but also in the pattern such as the iris pattern on the surface of the human body. Accordingly, an object of the present invention is to provide a code used to identify the pattern such as fingerprint on the surface of the human body in a short period of time.

In the item (4), iris patterns of some persons are closely similar to one another in some cases. Accordingly, an object of the present invention is to provide an identification apparatus which correctly distinguishes a person from those having closely similar iris patterns.

### DISCLOSURE OF THE INVENTION

The present invention relates to a personal identification system comprising an identification information-recording section for recording one or more of identification data used to identify an individual; an application-specific code-recording section for recording application-specific codes each of which is a combination of the identification data corresponding to each of applications of the personal identification system; a certification data input section for accepting input of certification data corresponding to the identification data from a user of the personal identification system; a first comparing section for judging whether or not the certification data matches the application-specific code recorded in the application-specific code-recording section; and a second comparing section for judging whether or not the certification data matches the identification data recorded in the identification information-recording section.

The identification data includes, for example, a password and a fingerprint. The combination of the identification data refers to a series of flow effected in a manner that a password is typed and then a fingerprint of a right thumb is read, for example.

In the invention, the application-specific code-recording section records the application-specific codes each of which is a type of the identification data corresponding to each of the applications of the personal identification system.

In the invention, the identification data is a pattern on a surface of a human body. The pattern includes, for example, a fingerprint, a palm print, and an iris pattern.

In another aspect, the present invention relates to a personal identification record comprising an identification information-recording section for recording one or more of identification data used to identify an individual; an application-specific code-recording section for recording application-specific codes each of which is a combination of the identification data corresponding to each of applications of a personal identification system; and an interface for connection to an external device.

In still another aspect, the present invention relates to a personal identification record comprising an identification information-recording section for recording one or more of identification data used to identify an individual; an application-specific code-recording section for recording application-specific codes each of which is a combination of the identification data corresponding to each of applications of a personal identification system; and a communicating section for data communication with an external device. The communicating section is, for example, an IC tuning circuit.

In the invention, the application-specific code-recording section records the application-specific code which is changed periodically, for example, weekly or monthly.

In the present invention, the certification data input section has a fingerprint scanner comprising a transparent finger placement stand for placing a finger thereon; a light source for irradiating a fingerprint portion of the finger through the finger placement stand; and an image pickup element for picking up light reflected by the fingerprint portion of the finger. The finger placement stand has a finger-adapting section which is composed of a transparent member along the fingerprint portion of the finger. A predetermined range including the fingerprint portion is subjected to scanning by using the light source from the outer circumference of the finger placement stand. The image pickup element includes, for example, CCD.

In the invention, the finger-adapting section preferably has a circular shape.

In the present invention, the certification data input section has an iris scanner comprising a light source for irradiating an eyeball with light at different intensities; an image pickup element for imaging an iris when said iris is irradiated with the light source; and an iris table for recording images of the iris corresponding to the respective intensities of the light from the light source. A comparing section is used to compare images imaged by the image pickup element with the images recorded in the iris table.

In the present invention, the certification data input section has an iris scanner comprising a light source for irradiating an eyeball; a modulating element for changing an intensity of light from the light source depending on a user; an image pickup element for imaging an iris when the iris is irradiated with the light from the light source changed by the user; and an iris table for recording at least two or more images of the iris corresponding to intensities of the light variously changed beforehand by the user. A comparing section is used to compare images imaged by the image pickup element with the images recorded in the iris table.

In the invention, it is preferable that a cover is provided over a light path ranging from the light source to the eyeball so that the intensity of the light from the light source is invisible to another person.

In the present invention, the certification data input section records data of distances from a center, of intersections between a pattern and radial axes extended radially from the center, the data being obtained for the respective radial axes, the center being disposed at an arbitrary spot of the pattern on a surface of a human body, and the data being recorded as dots on recording radial axes corresponding to the radial axes, about a recording center disposed on a recording plane. The pattern on the surface of the human body includes, for example, a fingerprint and an iris pattern. The dots include, for example, black dots and cross marks.

### BRIEF DESCRIPTION OF THE DRAWINGS

FIG. 1 is a block diagram illustrating a personal identification system according to a first embodiment of the present invention;

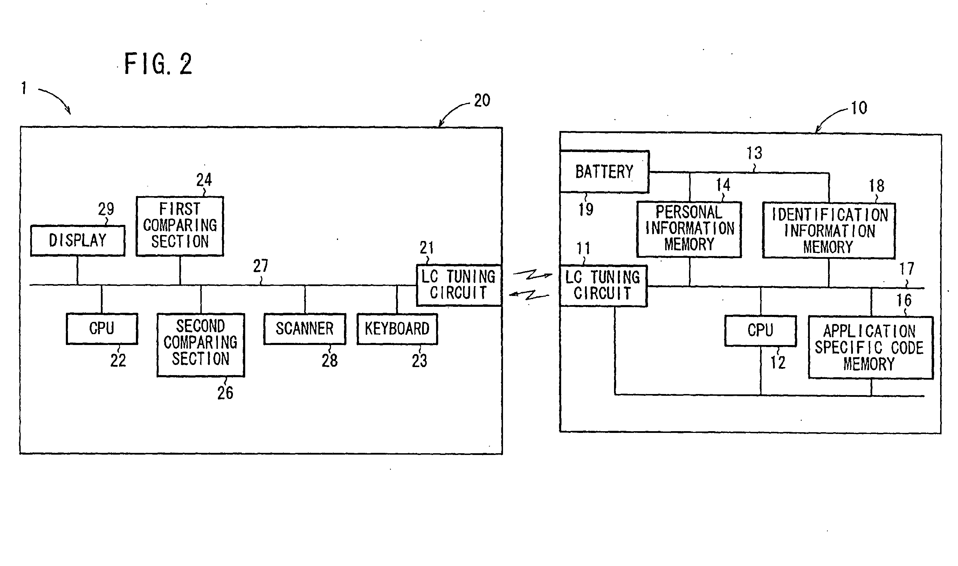

FIG. 2 is a block diagram illustrating a personal identification system according to a second embodiment of the present invention;
FIG. 3A shows the contents of a table illustrating the relationship between the applications and the application-specific codes;
FIG. 3B shows the meanings of the application-specific codes;
FIG. 3C shows the application-specific codes for respective days of the week;
FIG. 4A is a side view illustrating a fingerprint scanner according to a third embodiment of the present invention;
FIG. 4B is a front sectional view illustrating the fingerprint scanner;
FIG. 5A shows an arrangement in which a finger placement stand has a semi-cylindrical shape;
FIG. 5B shows an arrangement in which a finger placement stand has a semi-elliptical shape;
FIG. 6 is a block diagram illustrating an iris-collating apparatus according to a fifth embodiment of the present invention;
FIG. 7 shows details of an iris table 216a;
FIG. 8 schematically shows a procedure for obtaining data for respective radial axes from a fingerprint 320;
FIG. 9 schematically shows a procedure for recording data on a recording plane;
FIG. 10A is a plan view illustrating an IC card 340 using a code member 350;
FIG. 10B is a side view illustrating the IC card 340 using the code member 350;
FIG. 11A shows a reading method in which the code member 350 is moved back and forth;
FIG. 11B shows a reading method in which the code member 350 is rotated counterclockwise;
FIG. 12 is a block diagram illustrating an exemplary internal arrangement of a personal identification system using an iris scanner of the present invention;
FIG. 13A is a front view depicting an illustrative embodiment of the personal identification system using the iris scanner of the present invention;
FIG. 13B is a side view depicting the illustrative embodiment of the personal identification system using the iris scanner of the present invention; and
FIG. 14 schematically shows a structure of an eyepiece section of the personal identification system using the iris scanner.

### BEST MODE FOR CARRYING OUT THE INVENTION

Embodiments of the present invention will be explained below with reference to the drawings.

### 1. First Embodiment

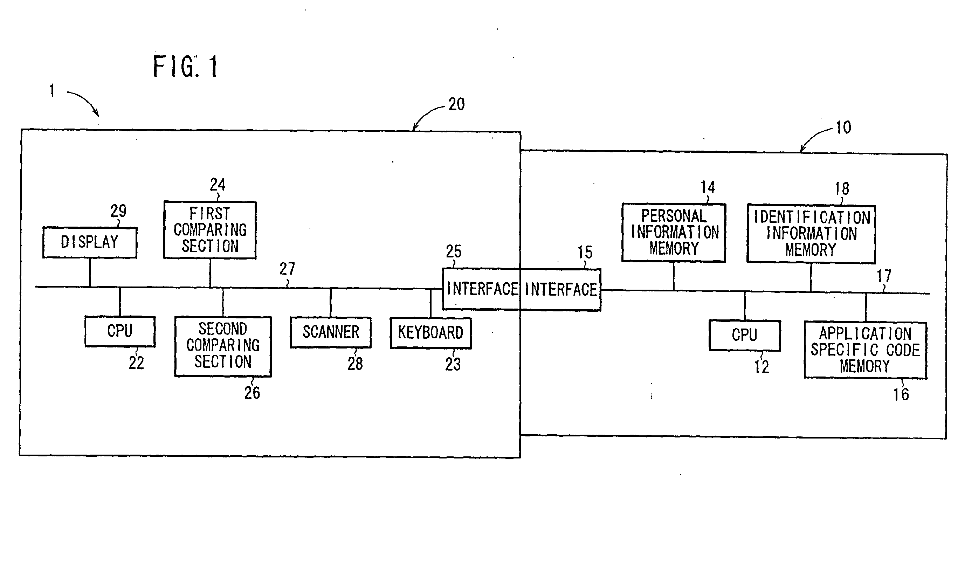

FIG. 1 shows a block diagram illustrating a personal identification system according to the first embodiment of the present invention.

The personal identification system 1 comprises an IC card 10 (personal identification record) and a main system 20. A user of the personal identification system 1 connects the IC card 10 to the main system 20 by using an interface 15 of the IC card 10 and an interface 25 of the main system 20.

Subsequently, the user inputs certification data by means of the device (certification data input section) including, for example, a scanner 28 and a keyboard 23. The certification data corresponds to identification data described later on, including, for example, a fingerprint, a password, and a combination thereof of the user. Further, the certification data may include a voiceprint. In this case, the certification data input section includes a recorder.

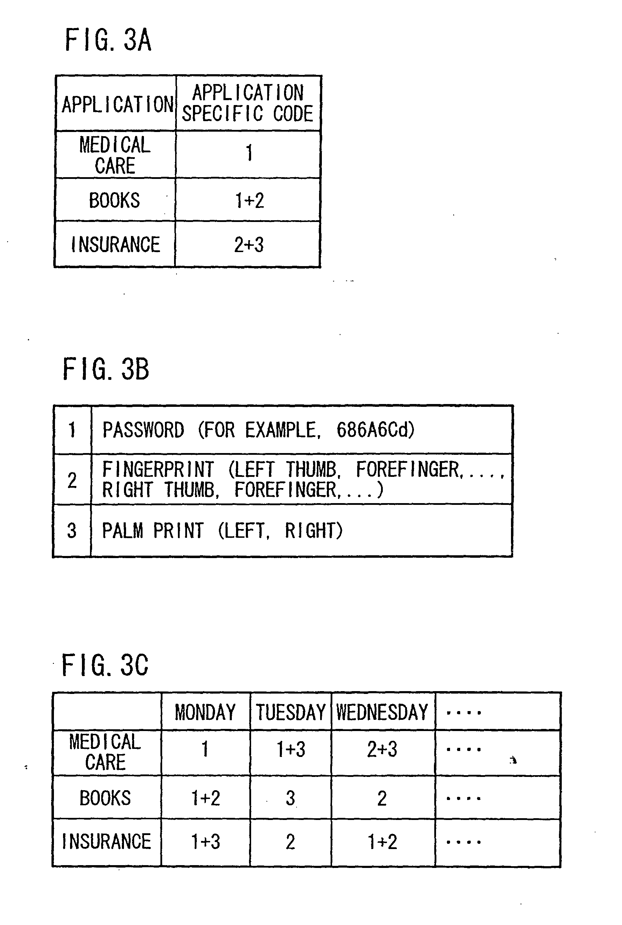

Subsequently, a first comparing section 24 makes comparison to judge whether or not the certification data inputted by the user matches an application-specific code recorded in an application-specific code memory 16. An example of the application-specific codes is shown in FIGS. 3A, 3B, and 3C. As shown in FIG. 3A, the code is allotted to each of the applications. The meanings of the application-specific codes shown in FIG. 3A are illustrated in FIG. 3B. When the IC card 10 is used for the medical care, only a password is inputted. When the IC card 10 is used for the insurance, then a fingerprint of a certain finger is inputted, and then a palm print is inputted. The contents of the application-specific code may be a pattern such as a fingerprint, a palm print, and an iris pattern on the surface of the human body. As shown in FIG. 3C, the application-specific code may be changed depending on the day of the week. This procedure is performed using the table shown in FIG. 3C recorded in the application-specific code memory 16.

Therefore, the first comparing section 24 makes comparison to determine whether or not the different types of certification data match the order of the contents stored in the application-specific code memory.

Subsequently, a second comparing section 26 makes comparison to judge whether or not the certification data inputted by the user matches identification data recorded in an identification information memory 18. In this procedure, it is judged whether or not the certification data such as the fingerprint, the password inputted by the user is correct.

If it is judged that the certification data matches the identification data, in the first comparing section 24 and the second comparing section 26, information can be read for each of the applications from a personal information memory 14 which records information in a variety of personal applications, including but not limited to, personal records of the medical care and the book lending. Therefore, this system can be used in a variety of applications.

A display 29 displays a variety of information for the user. CPUs 12, 22 control the respective components of the IC card 10 and the main system 20. Buses 17, 27 connect the respective components of the IC card 10 and the main system 20.

If it is judged that the certification data does not match the identification data in the first comparing section 24 or the second comparing section 26, the contents of the personal information memory 14 are erased by the CPU 12 or 22.

The contents of the personal information memory 14 are recorded in a confidential information storage system (not shown). The IC card 10 may be issued or reissued when the user inputs a predetermined password into the confidential information storage system.

In the personal identification system 1, the application-specific code memory 16 corresponds to the application-specific code-recording section, and the identification information memory 18 corresponds to the identification information-recording section.

In the first embodiment, it is preferable that each of the personal information memory 14, the application-specific code memory 16, and the identification information memory 18 is, for example, E²PROM, because the storage contents can be maintained even when the IC card 10 is separated from the main system 20. When the IC card 10 is installed to the main system 20, the IC card 10 is operated by the electric power supplied from the main system 20.

### 2. Second Embodiment

The same components or parts as those of the first embodiment are designated by the same reference numerals as those used in FIG. 1, explanation of which will be omitted. The second embodiment is different from the first embodiment in that a non-contact type IC card is used. Data communication is made by LC tuning circuits 11, 21. The IC card 10 has a chargeable battery 19. The electric power is supplied from the battery 19 to the respective components via an electric wire 13.

The LC tuning circuit 11 of the IC card 10 can also receive data from an unillustrated communication device (for example, a portable telephone) in the following procedure, for example. When a certain specified code (destruction code) is received from the communication device, the contents of the personal information memory 14 may be erased by the CPU 12 or 22. Further, an electric wave may be sent from the LC tuning circuit 11. Therefore, the position of the IC card 10 can be detected with the electric wave. In the personal identification system 1, the LC tuning circuit 11 functions as the communicating section.

The above embodiment may be applicable for sending the emergency message. In case of emergency, for example, when there is a serious danger which may risk someone's life, the card is bent for activating a sensor in the card. The sensor senses the bending of the card through a circuit in the card, and sends a special message indicating the bending of the card. In this system, the special message is sent to the nearest emergency center. The source of the signal is detected to confirm the place from which the message is sent. Therefore, lifesavers such as rescue members can quickly arrive at the place of the card owner to perform a rescue operation. When the situation is not especially urgent, i.e., when the emergency message is used to call the ambulance or police, but the danger is not so serious to risk someone's life, then the card is strongly pushed at a predetermined position. Accordingly, the circuit in the card sends an ordinary message.

In the second embodiment, each of the personal information memory 14, the identification information memory 18, and the application-specific code memory 16 may be RAM which uses the battery 19.

### 3. Third Embodiment

The third embodiment relates to the scanner 28 in the first and second embodiments. Especially, the third embodiment relates to a fingerprint scanner.

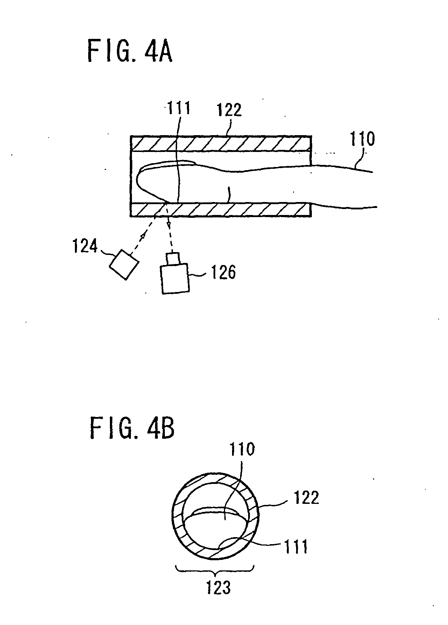

FIG. 4A is a side sectional view illustrating the fingerprint scanner according to the third embodiment, and FIG. 4B is a front sectional view thereof. The light, which is radiated from a light source 124, is transmitted through a transparent finger placement stand (for example, glass or resin) 122. The light is reflected by a fingerprint portion 111 of a finger 110, and the light is captured by CCD 126.

In this embodiment, a predetermined range, which includes the fingerprint portion, is subjected to scanning over the outer circumference of the finger placement stand 122 with the light source 124. Accordingly, a fingerprint is captured by CCD 126.

As shown in FIG. 4B, the transparent finger placement stand 122 is cylindrical. The inner wall of the finger placement stand 122 is adapted to the fingerprint portion 111. That is, the finger placement stand 122 includes a finger-adapting section 123.

### 4. Fourth Embodiment

In the fourth embodiment, the shape of the finger placement stand 122 of the third embodiment is changed.

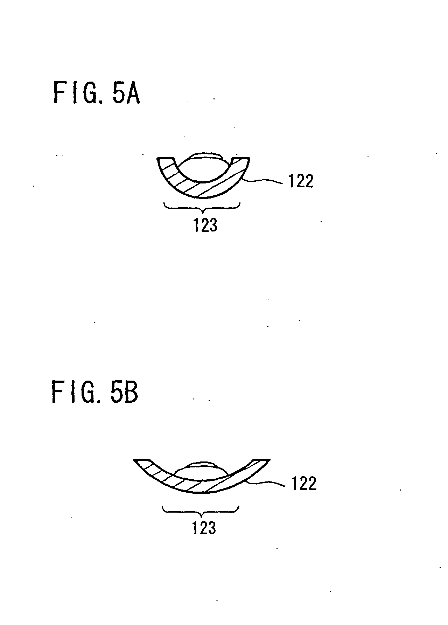

The finger placement stand 122 may not be cylindrical. For example, the finger placement stand 122 may be semi-cylindrical as shown in FIG. 5A or semi-elliptical as shown in FIG. 5B. The shape of the finger placement stand 122 is not limited to cylindrical, semi-cylindrical and semi-elliptical as long as the finger-adapting section 123 is formed.

### 5. Fifth Embodiment

The fifth embodiment relates to the scanner 28 in the first and second embodiments. Especially, the fifth embodiment relates to an iris scanner.

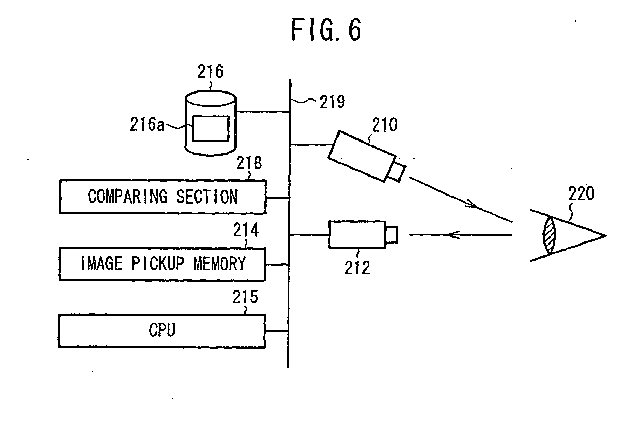

As shown in FIG. 6, a CPU 215 controls respective components via a bus 219. An eyeball 220 is irradiated with a light source 210 by using an unillustrated modulating element, for example, while making change into n, (n+Δs₁), (n+Δs₂),... luxes so that the eyeball 220 is irradiated therewith. Those usable as the modulating element include, for example, a variable resistor for regulating the electric power to be supplied to the light source, and a method for regulating the intensity by using a lens. The values of n, (n+Δs₁), (n+Δs₂),... luxes of the radiating light source 210 are also information which should not be known by another person. The user sets the values when the user initially. uses the personal identification system. When the eyeball 220 is irradiated with the light, the image (pattern) of the iris of the eyeball 220 is changed, for example, by opening/closing the pupil.

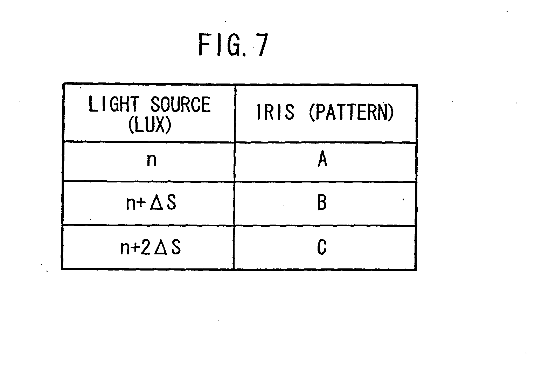

The color tone and the form of the iris are photographed by a CCD camera 212 in combination with the pupil which is obtained when the light having a different illuminance is radiated. The image, which is picked up by the CCD camera 212, is appropriately stored in an image pickup memory (frame memory) 214. A memory 216 has an iris table 216a. Details of the iris table 216a are shown in FIG. 7. The illuminances n, (n+Δs₁), (n+Δs₂),... luxes of the light source 210 correspond to the image patterns A, B, C of the iris. A comparing section 218 compares the iris table 216a with the image in the image pickup memory 214 for each of the intensities of the light from the light source. If all values are identical, it is possible to verify that the user is the authorized person.

In FIG. 6, for ease of explanation, the eyeball 220, the light source 210, and the CCD camera 212 are separated from each other by certain distances. However, when the present invention is practically carried out, a cover is provided over the eyeball 220, the light source 210, and the CCD camera 212 so that the intensity of the light from the light source is not measured from the outside.

### 6. Sixth Embodiment

In first and second embodiments, the identification information such as the fingerprint is recorded in the identification information memory 18 in the IC card 10. However, in the sixth embodiment, the identification information such as the fingerprint is recorded with a code composed of printed dots such as black dots and cross marks.

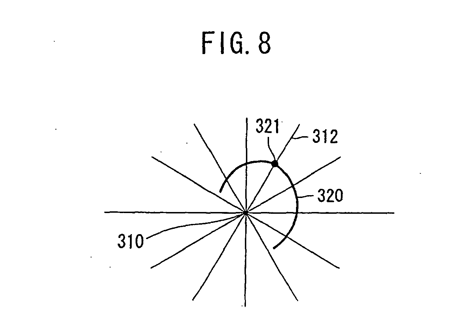

FIG. 8 schematically shows a procedure for obtaining data for each of radial axes from a fingerprint 320. A certain dot 310 is disposed at the center from which the radial axes 312 are extended. The distance from the certain dot 310 to an intersection 321 between the radial axis 312 and the fingerprint 320 is obtained as data for each of the radial axes 312.

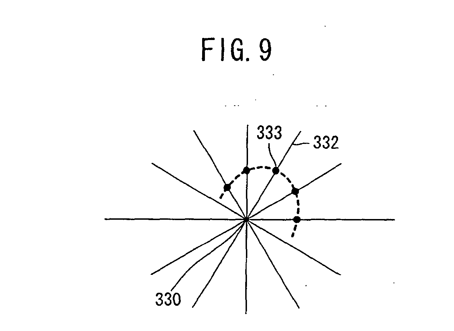

FIG. 9 schematically shows a procedure for recording the data on a recording plane. Starting from a recording center 330, the data are applied as indicated by dots 333 onto recording radial axes 332 corresponding to the radial axes 312. The fingerprint 320 is subjected to sampling for each of the radial axes 312. This procedure is not limited to the fingerprint 320, which may be applied, for example, to the iris pattern and the palm pattern in the same manner as described above. A variety of forms may be assumed for the dots 333 including, for example, black dots and cross marks.

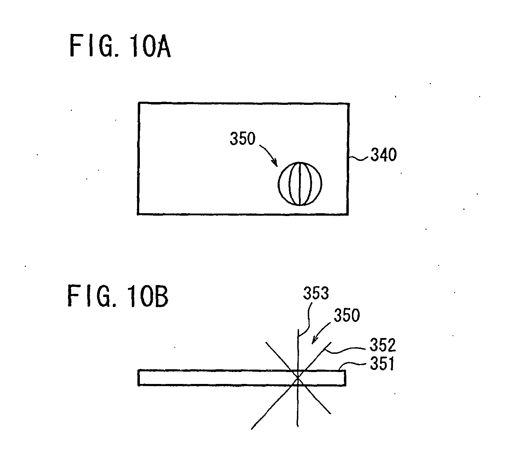

FIGS. 10A and 10B show an IC card 340 which utilizes a code member 350 as described above. The code member 350 includes a plurality of recording planes 351, 352, 353. Therefore, the code member 350 looks like a sphere. When the code member 350 is used, it is possible to record, for example, a plurality of fingerprint data.

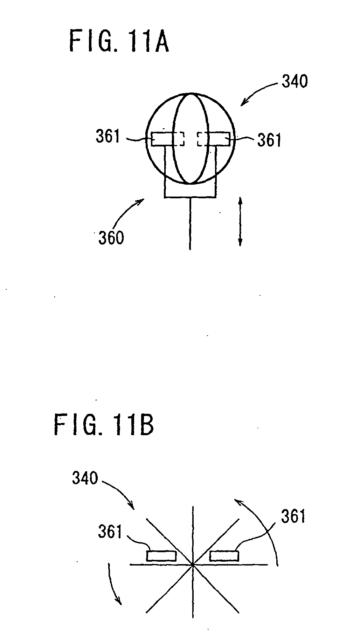

A method for reading the code member 350 is shown in FIGS. 11A and 11B. A scanner 360 branches off into two, in which a reading section 361 is branched into right and left portions. The scanner 360 is moved back and forth as shown in FIG. 11A. When the scanner 360 is moved back, it is rotated counterclockwise as shown in FIG. 11B. After that, the scanner 360 is moved forth. In this way, the dots 333 are read for each of the recording planes.

The sampling is performed for each of the radial axes as described above. Therefore, it is possible to economize on the time required to make comparison for the verification.

The personal identification system of the present invention having been explained in each of the embodiments can be utilized in a variety of applications including, for example, medical care, insurance policy, ID, title deed, insurance certificate, book library, passenger ticket, shopping, international use of airline ticket, communication, personal property management, automobile inspection certificate, business with banks, postal payment and deposit and saving, mailing cost, emergency message, and confirmation of position. Explanation will be made, for example, for a case in which the personal identification system of the present invention is used for sending the emergency message. In case of emergency, for example, when there is a serious danger which may risk someone's life, the card is bent for activating a sensor in the card. The sensor senses the bending of the card through a circuit in the card, and sends a special message indicating the bending of the card. In this system, the special message is sent to the nearest emergency center. The source of the signal is detected to confirm the place from which the message is sent. Therefore, lifesavers such as rescue members can arrive at the place of the card owner to perform a rescue operation. When the situation is not so urgent, i.e., when the emergency message is used to call the ambulance or police, but the danger is not so serious to risk someone's life, then the card is strongly pushed at a predetermined position. Accordingly, the circuit in the card sends an ordinary message.

As for the appearance of the card, when the personal identification system of the present invention is practically used as the card, it is not necessary to describe anything on the surface of the card at all. The surface of the card may not have any unevenness. The card is coated with a hard cover. When the coating is destroyed, all of the contents of the card are erased and destroyed. Therefore, it is impossible for another person to investigate the contents of the card and examine the function thereof. The card is never counterfeited (copied). Therefore, the card does not have any security problems. Information for PR, advertisement or other purposes may be indicated on the surface (coating portion) of the card.

### EXAMPLE

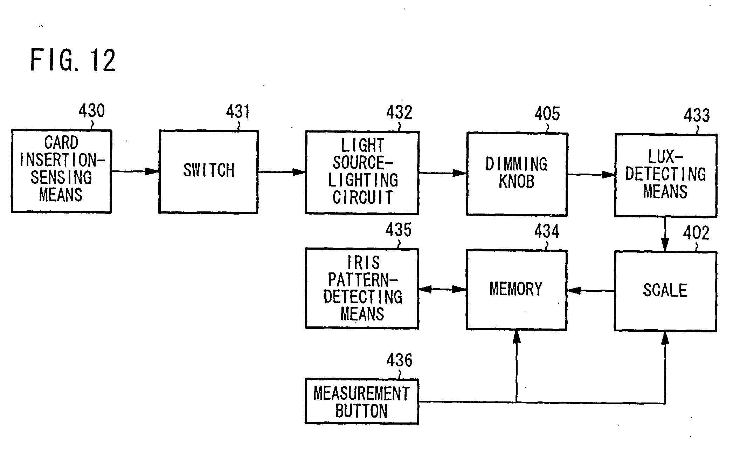

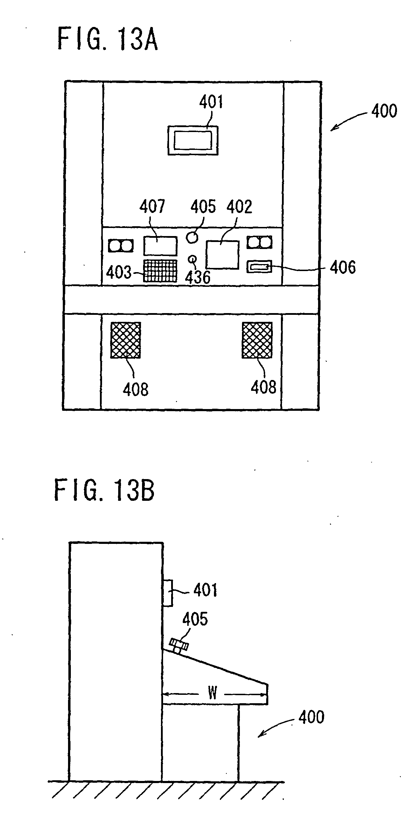

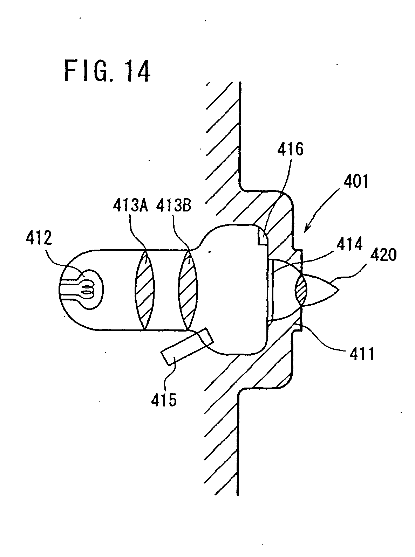

A personal identification system using of an iris scanner will be explained with reference to FIGS. 12 to 14. FIG. 12 is a block diagram illustrating an exemplary internal arrangement of the personal identification system using the iris scanner. FIGS. 13A and 13B show the appearances illustrating an exemplary embodiment of the personal identification system using the iris scanner. FIG. 14 schematically shows a cross section of an eyepiece section of a registration-certifying apparatus.

As shown in FIG. 13A, the registration-certifying apparatus 400 comprises, for example, an eyepiece section 401, a scale 402, an input section 403 such as a keyboard, a dimming knob 405, a card insertion section 406, a display 407, speakers 408, and measurement buttons 436. As shown in the side view in FIG. 13B, the apparatus has a protruding width W so that a user of the apparatus may easily focus the eye on the eyepiece section 401 in order to successfully perform necessary operations. The eyepiece section 401 may be designed either for both eyes or for one eye. The cross section of the eyepiece section 401 is shown in FIG. 14. That is, a mask section 411, which makes tight contact with the face (eye 420), is provided so that the radiating light does not leak to the outside, or the external light does not leak to the inside. A light source 412 for photometrically measuring the iris, dimming lenses 413A, 413B for regulating the light from the light source 412, and an eyepiece window 414 are provided in the eyepiece section 401. A CCD sensor 415 for reading and recording the iris pattern in the eye 420 which changes by radiating the light onto the eyeball of the user is disposed in the eyepiece section 401 such that the radiation of light is not disturbed thereby. Further, a CCD element 416 is disposed in the eyepiece section 401 to measure the illuminance for the eye 420. As for the dimming lenses 413A, 413B, a single lens may be used, or three or more lenses may be used.

Explanation will be made below with reference to the block diagram shown in FIG. 12 and the appearances of the apparatus shown in FIGS. 13A and 13B. When the IC card, which is exemplified by the first embodiment shown in FIG. 1, is inserted into the card insertion section 406 of the registration-certifying apparatus 400, the insertion of the card is sensed by a card insertion-sensing means 430. A switch 431 is turned ON, and a light source-lighting circuit 432 of the light source 412 for photometrically measuring the iris is started.

The user focuses the eye on the eyepiece section 401 and/or inputs the code number or the like from the input section 403 such as the keyboard in accordance with the instruction of the voice guidance outputted from the speaker 408 and/or the display guidance displayed on the display 407. When the eye contact with the eyepiece section 401 is instructed, the user focuses the eye 420 on the eyepiece section 401 as shown in FIG. 14 to enter the step of regulating the illuminance (lux) of the light from the light source 412 by using the dimming knob 405.

When the dimming knob 405 is operated, a lux-detecting means 433, which includes the CCD element 416 or the like, is operated. The user can adjust the illuminance (lux) of the light with which the eyeball is irradiated, by using the dimming knob 405 while following the instruction from the registration-certifying apparatus 400 or viewing the scale 402 shown in FIGS. 13A and 13B. The user can view the intensity of the light at the position of the CCD sensor which is indicated in the scale 402.

When the illuminance of the radiating light is appropriate, the user depresses the measurement button 436 to photograph, with the CCD sensor 415, the image of the eyeball including the form and the color tone of the pupil and the iris depending on the lux in this state as shown in FIG. 6. Simultaneously, the value of the lux-detecting means 433 in this state and the pattern applied with necessary image processing after being photographed by the CCD sensor 415 are recorded in a memory 434. When the verification is performed, the intensity of the light source 412 is adjusted by adjusting the dimming knob 405 in conformity with the value of the scale 402 measured upon the registration. However, images of the eyeball, which are obtained when the illuminance (lux) of the light is slightly changed increasingly or decreasingly by Δs₁ (or Δs₂, Δs₃,...), are further photographed by the CCD sensor 415 to make collation with the image pattern of the eyeball recorded in the memory 434. In this procedure, the measured image pattern of the eyeball may be recorded in'the memory 434. The image recorded in the memory 434 or the measured image is subjected to the comparison for the illuminance (lux) of the light stored in the iris table in the memory 434 and the image pattern of the iris corresponding thereto to judge whether or not the user of the card is the genuine card owner by means of an iris pattern-detecting means 435. When the iris pattern-detecting means 435 confirms that the user of the card is the genuine card owner, for example, the process for book lending or the process for withdrawing cash is executed thereafter.

When the user pulls out the IC card 10 from the card insertion section 406 of the registration-certifying apparatus 400 after completing the process, the intensity of the, radiating light used upon the collation is reset to the initial state, automatically turning the light source 412 OFF. Therefore, no person can know the intensity of the light used by the user.

When the above apparatus is practically used, the value of the illuminance (lux) of the light used when the image of the iris is photographed plays a role of the code number. It is necessary for the user to memorize the value of the illuminance (lux) of the light (value of the scale 402). However, practically, it is difficult to correctly remember the illuminance (lux) of the light. Therefore, it is also possible to memorize the value in the IC card 10 beforehand. In this case, in order to derive the illuminance of the light stored in the IC card beforehand, the apparatus gives the instruction to the user, and the user adjusts the illuminance (lux) of the light by using the dimming knob 405 in accordance with the instruction. Alternatively, in order that the user obtains the illuminance of the light stored in the IC card 10 beforehand, the scale 402 shown in FIG. 13A is used as a relative guide. In this case, the scale 402 may indicate the absolute lux. However, it is desirable to adopt a relative display method; because the lux is the secret information as described above.

FIGS. 13A and 14 show the illustrative embodiment of the present invention, to which the present invention is not limited. For example, in FIG. 13A, the keyboard 403 and the display 407 are separated. However, it is also possible to integrate the both components into one unit by using a touch panel type display.

### INDUSTRIAL APPLICABILITY

In the present invention, the first comparing section judges whether or not the certification data matches the application-specific code recorded-in the application-specific code-recording section, and the second comparing section judges whether or not the certification data matches the identification data recorded in the identification information-recording section. Therefore, if it is judged that the data is verified in the first comparing section and the second comparing section, information can be read for each of the applications from the personal information memory recorded with information for a variety of personal applications including, but not limited to, personal information of medical care and book lending. Therefore, the personal identification system can be used in a variety of applications.

In the present invention, the fingerprint scanner comprises the transparent finger placement stand for placing a finger thereon, and the image pickup element for picking up light reflected by a fingerprint portion of the finger, wherein the finger placement stand has the finger-adapting section along the fingerprint portion of the finger. The image of the fingerprint portion is scarcely distorted. As a result, the image of the fingerprint is hardly changed.

In the present invention, the modulating element changes the lux from the light source depending on a user, the image pickup element images an iris when an eyeball is irradiated with the light changed by the user, the iris table records the images of the iris corresponding to the luxes variously changed beforehand by the user, and the comparing section compares the images imaged by the image pickup element with the images recorded in the iris table. The lux arbitrarily set by each of users, and the image of the iris obtained when the eyeball is irradiated at the lux are used as the means for identifying the individual. As a result, it is possible to provide the verification apparatus which can reliably makes distinction even for a person having an extremely similar iris pattern.

In the present invention, the data of the distances from the center, of the intersections between the pattern and the radial axes extended radially from the center are obtained for the respective radial axes, the center being disposed at an arbitrary spot of the pattern on a surface of a human body, and the data are recorded as the dots on the recording radial axes corresponding to the radial axes, about the recording center disposed on the recording plane. Accordingly, it is possible to provide the code wherein the pattern on the human body can be subjected to the sampling for the respective radial axes, and the verification of the pattern such as the fingerprint on the surface of the human body can be performed in a short period of time.

## Claims

1. A personal identification system for identifying an individual, comprising:
an identification information-recording section for recording identification data used to identify said individual;
an application-specific code-recording section for recording application-specific codes each of which is a combination of said identification data corresponding to each of applications of said personal identification system;
a certification data input section for accepting input of certification data corresponding to said identification data from a user of said personal identification system;
a first comparing section for judging whether or not said certification data matches said application-specific code recorded in said application-specific code-recording section; and
a second comparing section for judging whether or not said certification data matches said identification data recorded in said identification information-recording section.

2. The personal identification system according to claim 1, wherein said application-specific code-recording section records said application-specific codes each of which is a type of said identification data corresponding to each of said applications of said personal identification system.

3. The personal identification system according to claim 1 or 2, wherein said application-specific code-recording section records said application-specific code which is changed periodically.

4. The-personal identification system according-to any one of claims 1 to 3, wherein said identification data is a pattern on a surface of a human body.

5. A personal identification record comprising:
an identification information-recording section for recording identification data used to identify an individual;
an application-specific code-recording section for recording application-specific codes each of which is a combination of said identification data corresponding to each of applications of a personal identification system; and
an interface for connection to an external device.

6. A personal identification record comprising:
an identification information-recording section for recording identification data used to identify an individual;
an application-specific code-recording section for recording application-specific codes each of which is a combination of said identification data corresponding to each of applications of a personal identification system; and
a communicating section for data communication with an external device.

7. A fingerprint scanner comprising:
a transparent finger placement stand for placing a finger thereon;
a light source for irradiating a fingerprint portion of said finger through said finger placement stand; and
an image pickup element for picking up light reflected by said fingerprint portion of said finger,
wherein said finger placement stand includes a finger-adapting section along said fingerprint portion of said finger.

8. The fingerprint scanner according to claim 7, wherein said finger-adapting section has a circular shape.

9. An iris-collating apparatus comprising:
a light source for irradiating an eyeball with light at different illuminances;
an image pickup element for imaging an iris when said iris is irradiated with said light source;
an iris table for recording images of said iris corresponding to said respective illuminances of said light from said light source; and
a comparing section for comparing images imaged by said image pickup element with said images recorded in said iris table.

10. An iris-collating apparatus comprising:
a light source for irradiating an eyeball;
a modulating element for changing an illuminance of light from said light source depending on a user;
an image pickup element for imaging an iris when said iris is irradiated with said light from said light source changed by said user;
an iris table for recording at least two or more images of said iris corresponding to illuminances of said light variously changed beforehand by said user; and
a comparing section for comparing images imaged by said image pickup element with said images recorded in said iris table.

11. The iris-collating apparatus according to claim 9 or 10, wherein a cover is provided over a light path ranging from said light source to said eyeball so that said illuminance of said light from said light source is invisible to another person.

12. A position-recorded code recorded with a pattern on a surface of a human body, comprising data of distances from a center, of intersections between said pattern and radial axes extended radially from said center, said data being obtained for said respective radial axes, said center being disposed at an arbitrary spot of said pattern on said surface of said human body, and said data being recorded as dots on recording radial axes corresponding to said radial axes, about a recording center disposed on a recording plane.
